# EUROPÄISCHE PATENTSCHRIFT

(11) **EP 1 884 155 B1**
(45) Veröffentlichungstag und Bekanntmachung des Hinweises auf die Patenterteilung: **21.10.2009**
(21) Anmeldenummer: 07112994.4
(22) Anmeldetag: 24.07.2007
(51) Int. Cl.: A01D 90/00, A01F 15/10

(54) **Landwirtschaftliche Erntemaschine**
Agricultural harvester
Moissonneuse agricole

(30) Priorität: 04.08.2006 DE 102006036588
(43) Veröffentlichungstag der Anmeldung: 06.02.2008
(73) Patentinhaber: Deere & Company, Moline, IL 61265-8098 (US)
(72) Erfinder: Viaud, Jean, 70100 Gray (FR)
(74) Vertreter: Magin, Ludwig Bernhard

(56) Entgegenhaltungen:
- EP-A- 1 574 124
- DE-A1- 19 546 263
- DE-A1- 19 841 598

## Beschreibung

Die Erfindung betrifft eine Landwirtschaftliche Erntemaschine, insbesondere Presse oder Ladewagen mit einer Förderkanalwand, die ein stromaufwärts gelegenes Lager und einen stromabwärts gelegenen Anschluß für einen Endbereich einer Stellvorrichtung aufweist, die andererseits maschinenseitig anbringbar ist, und mit einem Lenker zwischen dem stromaufwärts gelegenen Lager und einem maschinenseitigen Lager.

Die DE 198 41 598 A1 zeigt eine Rundballenpresse mit einer Schneidevorrichtung in einem Förderkanal zwischen einer Pick-up und einem Pressraum. Der Boden des Förderkanals kann an beiden Enden abgesenkt werden, um Gutstaus zu vermeiden oder zu beseitigen. Das stromaufwärts liegende Ende ist mittels Lenkern an die Pick-up angeschlossen, die von einem Hydraulikzylinder gesteuert werden.

Das der Erfindung zugrunde liegende Problem wird darin gesehen, dass die Lagesteuerung des stromaufwärts liegenden Endbereichs zu aufwendig ist.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise werden mittels nur einer Stellvorrichtung beide Endbereiche der Förderkanalwand in ihrer Lage gesteuert. Die Verwendung zweier Lager an dem stromaufwärts gelegenen Endbereich, die maschinenseitig angeschlossen sind, bewirkt eine Zwangsführung, die von der Stellung des stromabwärts gelegenen Endbereichs abhängt. Das Lager, wie auch die Führung können als Gleit- oder Rollenlager ausgebildet sein und sich an der Kanalwand bzw. der Maschine, also z.B. an dem Gutaufnehmer oder dem Gestell der Maschine, z.B. einer Presse oder einem Ladewagen befinden. Die Führung kann in einem Schlitz, einer Kurvenbahn, einem Gestänge oder dergleichen gebildet werden. Die Verstellung aufgrund der Führung kann quer und/oder entlang des Förderstroms erfolgen, wobei auch federnde Elemente oder Überlastsicherungen verwendet werden können.

Wenn die Führung eine Krümmung aufweist, kann je nach Ausbildung der Krümmung anstatt einer linearen, eine progressive oder eine degressive Verstellung erwirkt werden, je nach den Anforderungen. Die Krümmung - gleichmäßig oder ungleichmäßig - bestimmt auch die Richtung, in der die Verstellung erfolgt.

Wenn der Lenker zu der Verbindungsgeraden durch alle stromaufwärts gelegenen Lager keine oder nur einen geringen Winkel einschließt, kann er sich der einwirkenden Kraft des Förderstroms gerade entgegen stemmen und somit Reibung an der Führung vermeiden, was Verschleiß reduziert. In diesem Fall befindet sich die Förderkanalwand auch aufgrund ihrer Anlage am Ende der Führung in einer sehr stabilen Stellung.

Eine Anordnung der stromaufwärts gelegenen Lager in einem Dreieck hat zur Folge, dass sich die Förderkanalwand so weit wie möglich von der Führung wegbewegt, d.h. den Förderkanal weitet, um Gutstauprobleme zu vermeiden.

Eine fremdkraftbetätigte Stellvorrichtung z.B. ein Hydraulikzylinder oder Elektromotor kann leicht über einen Schaltkreis angesteuert werden, der sowohl von der Presse als auch von einem Zugfahrzeug aus betrieben werden kann. Eine solche Fremdkraftsteuerung kann sowohl manuell als auch automatisch erfolgen. Bei einfachen Bauarten könnte diese Verstellung aber auch mittels eines Gestänges, eines Hebels oder dergleichen ausgeführt werden.

Die Steuerung der Stellvorrichtung anhand von Parametern des Fördergutstroms lässt eine schnelle Reaktion auf Anzeichen für eine Verstopfung zu. So kann der Druck quer zu dem Förderstrom wie auch ein Drehmoment an dem Förderrotor ein geeignetes Signal für die Verstellung der Stellvorrichtung bilden. Andererseits kann auch die Gutdichte mit Ultraschall oder dergleichen erfasst und zu einem Signal verarbeitet werden.

Die Verwendung einer Feder (mechanisch, pneumatisch, Druckbegrenzungsventil in einem Hydraulikkreislauf, etc.) hat den Vorteil, dass Lastspitzen aufgefangen werden können, ohne dass es sofort zu einer Verstellung der Förderkanalwand kommt.

Zwar gibt es viele Einsatzverhältnisse, bei denen Gut gefördert wird und zu einem Gutstau führen kann, z.B. bei dem Transport von Wertstoffen und Müll in der Industrie, von landwirtschaftlichen Produkten in Silos, in Stallungen, etc., besonders kritisch ist die Verstopfungsgefahr bei Pressen und Ladewagen in der Landwirtschaft, die auf dem Feld eingesetzt werden, weil Verstopfungen dort schwierig zu beseitigen sind und die Ernte verzögern, was bei schlechtem Wetter zu Ernteeinbußen führen kann. Daher ist die Verwendung der Erfindung in dem schwer zugänglichen Bereich zwischen dem Gutaufnehmer und dem Gutstauraum besonders vorteilhaft.

In der Zeichnung ist ein nachfolgend näher beschriebenes Ausführungsbeispiel der Erfindung dargestellt. Es zeigt:
- Fig. 1: eine Presse mit einer erfindungsgemäßen Förderkanalwand in Seitenansicht und schematischer Darstellung,
- Fig. 2: die Förderkanalwand in einer einem Förderrotor zugelegenen Stellung und mit einem Hydraulikkreislauf für eine Stellvorrichtung,
- Fig. 3: die Förderkanalwand in einer teils weggeschwenkten Stellung und
- Fig. 4: die Förderkanalwand in einer vollkommen von dem Förderrotor weggeschwenkten Stellung.

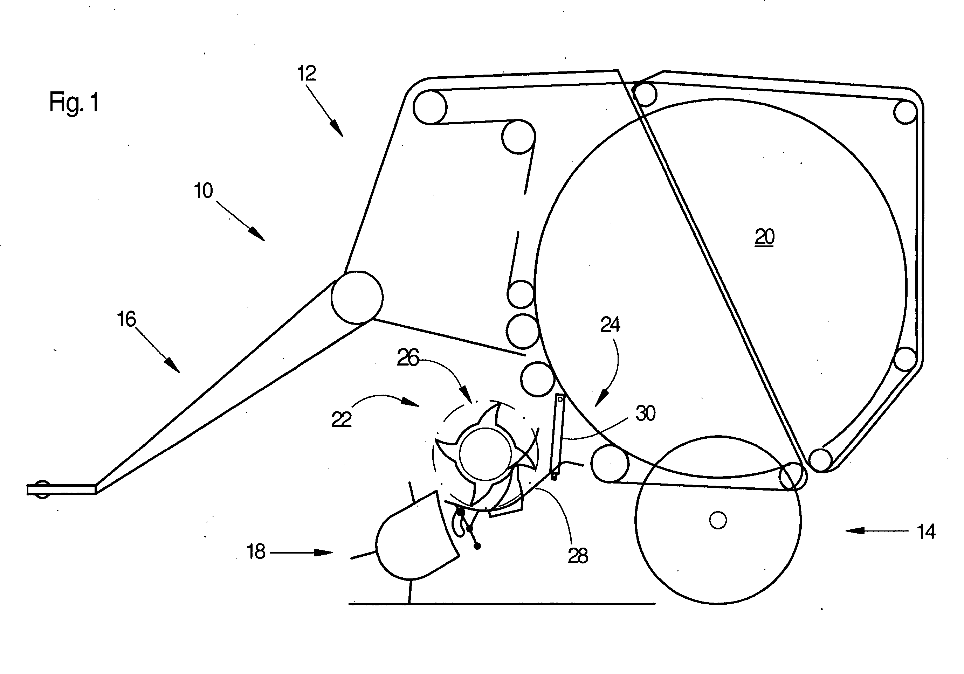

Eine in Figur 1 gezeigte Presse 10 ist von üblicher Bauart, d.h. sie weist einen Aufbau 12, ein Fahrgestell 14, eine Deichsel 16, einen Gutaufnehmer 18, einen Gutstauraum 20 und eine Fördervorrichtung 22 auf.

Die Presse 10 ist als eine gezogene Presse 10 mit einem größenveränderlichen Gutstauraum 20 dargestellt; es könnte sich genauso um eine selbstfahrende Presse 10 und/oder um einem mit einem in der Größe konstanten Gutstauraum 20 handeln, wobei die Art nicht näher bezeichneter Presselemente ohne Belang ist.

Der Aufbau 12 stützt sich auf dem Fahrgestell 14 ab und trägt den Gutaufnehmer 18 und die Fördervorrichtung 22 und bildet den Gutstauraum 20 zwischen nicht näher bezeichneten Seitenwänden.

Das Fahrgestell 14 enthält eine starr oder federnd angebrachte Achse und Räder.

Die Deichsel 16 ist starr oder vertikal schwenkbar an den Aufbau 12 angeschlossen und dient der Verbindung mit einem nicht gezeigten Zugfahrzeug.

Der Gutaufnehmer 18 wird auch als Pick-up bezeichnet und ist höhenbeweglich an den Aufbau 12 angeschlossen, wie dies ebenfalls bekannt ist.

Der Gutstauraum 20 weist an einem vorderen unteren Bereich einen Einlaß 24 für das Fördergut auf, der sich direkt an die Fördervorrichtung 22 anschließt.

Die Fördervorrichtung 22 kann mit dem Gutaufnehmer 18 oder dem Aufbau 12 starr oder beweglich verbunden sein und enthält unter anderem einen Förderrotor 26, eine Förderkanalwand 28, eine Stellvorrichtung 30 und in diesem Ausführungsbeispiel einen Hydraulikkreis 32 für die Stellvorrichtung 30 und eine Schneidvorrichtung 34. Die Fördervorrichtung 22 hat die Aufgabe, von dem Gutaufnehmer 18 herangeführtes Gut anzunehmen und es geschnitten oder ungeschnitten in den Gutstauraum 20 zu befördern. Je nach der Beschaffenheit des Guts an sich oder der Dichte des Gutstroms besteht dabei stets die Gefahr von Verstopfungen, in deren Vorfeld es zu einem erhöhten Druck auf die Förderkanalwand 28 kommt. Der Bereich zwischen dem Gutaufnehmer 18, dem Einlaß 24, der Förderkanalwand 28, dem Förderrotor 26 und nicht gezeigten Seitenwänden stellt einen Förderkanal 36 dar.

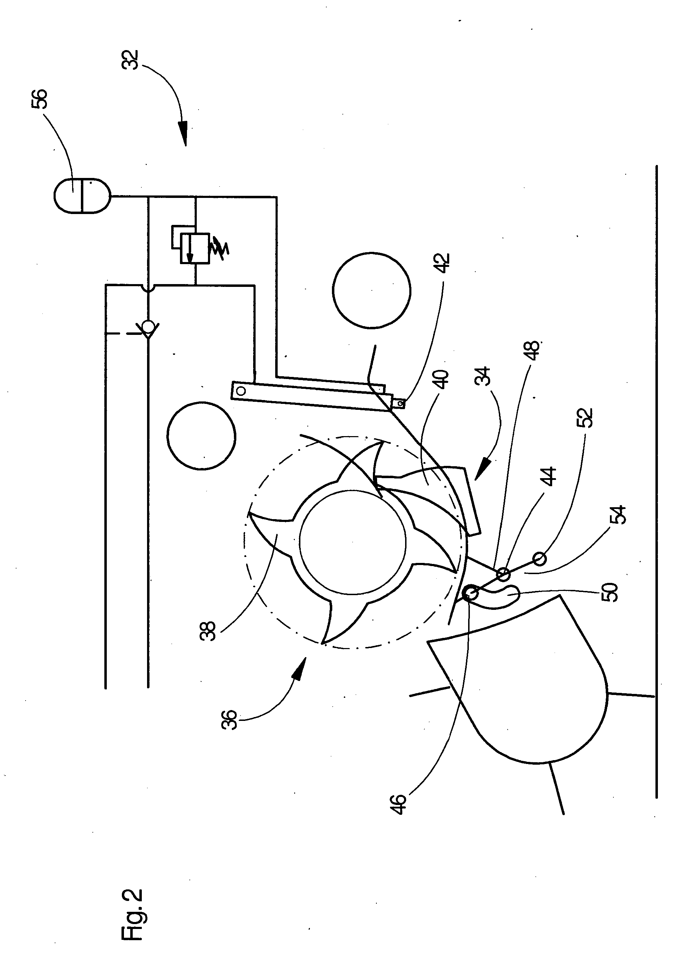

Der Förderrotor 26 kann in beiden Richtungen angetrieben werden und weist Mitnehmer 38 auf, die das Fördergut fördern und auf Messer 40 der Schneidvorrichtung 34 pressen, wenn solche vorhanden sind. Die Mitnehmer 38 reichen bei der Stellung der Förderkanalwand 24 gemäß den Figuren 1 und 2 bis nahe an diese heran.

Die Förderkanalwand 28 erstreckt sich zwischen dem Gutaufnehmer 18 und dem Einlaß 24 und folgt im Wesentlichen dem Umfang des Förderrotors 26 auf ca. einem Viertel dessen Umfangskreises. Während die Zeichnung eine unterschlächtige Fördervorrichtung 22 zeigt, könnte die Erfindung ebenso an einer oberschlächtigen Fördervorrichtung 22 verwendet werden. An der dem Förderrotor 26 abgelegenen Seite befindet sich an der Förderkanalwand 28 an deren stromabwärts gelegenen Endbereich ein Anschluß 42, an dessen stromaufwärts gelegenen Endbereich ein erstes Lager 44 und in dessen Nähe ein zweites Lager 46. In diesem speziellen Ausführungsbeispiel befinden sich das erste und das zweite Lager 44 und 46 an einem Träger 48, der gleichzeitig als eine Verstärkung für die Förderkanalwand 28 dienen kann. Richtet man Senkrechten auf die Oberfläche der Förderkanalwand 28 und durch das erste und das zweite Lager 44, 46, weisen diese einen Abstand zueinander auf, wobei sich das zweite Lager 46 näher an dem stromaufwärts gelegenen Ende befindet als das erste Lager 44; zudem weist das erste Lager 44 einen größeren Abstand zu der Förderfläche der Förderkanalwand 28 auf als das erste Lager 44. Der Anschluß 42 und die Lager 44 und 46 können sowohl als Zapfen, Schrauben, als eine durchgehende Stange etc. ausgebildet sein. Zwar sind der Anschluß 42 und die Lager 44, 46 unterhalb der Förderkanalwand 28, d.h. auf deren dem Förderrotor 26 abgelegenen Seite angebracht, weil dies leichter herzustellen und einzubauen ist; der Anschluß 42 und die Lager 44, 46 könnten aber auch auf deren anderer Seite vorgesehen werden. An dem stromaufwärts gelegenen Endbereich der Förderkanalwand 28 befindet sich eine Führung 50, die das zweite Lager 46 in sich gleitbeweglich aufnimmt. In diesem Ausführungsbeispiel ist die Führung 50 als ein Schlitz in einer an dem Gutaufnehmer 18 oder dem Aufbau 12 angebrachten Platte ausgebildet. Die Führung 50 ist im Wesentlichen nierenförmig ausgebildet und vertikal ausgerichtet. Wenigstens auf jeder Seite der Fördervorrichtung 22 ist eine Führung 50 vorgesehen.

Ferner ist an dem Gutaufnehmer 18 oder dem Aufbau 12 auf jeder Seite ein maschinenseitiges Lager 52 und zwischen diesem maschinenseitigen Lager 52 und dem ersten Lager 44 jeweils ein Lenker 54 vorgesehen, der beidenends schwenkbeweglich aufgenommen ist. Der Lenker 54 ist so bemessen, dass er im Wesentlichen auf einer Geraden liegt, die sich durch das maschinenseitige Lager 52, das erste Lager 44 und das zweite Lager 46 erstreckt, wenn sich die Förderkanalwand 28 in ihrer dem Förderrotor 26 zugelegenen Stellung befindet, in der das zweite Lager 46 an dem oberen Ende der Führung 50 anliegt. Wenn sich die Förderkanalwand 28 in ihrer unteren Endstellung befindet, bilden das maschinenseitige Lager 52, das erste Lager 44 und das zweite Lager 46 im Wesentlichen ein rechtwinkliges Dreieck, dessen einer Schenkel von dem Lenker 54 gebildet wird.

Der stromabwärts gelegene Anschluß 42 befindet sich nahe an der Förderfläche der Förderkanalwand 28 in einem gerade auslaufenden Abschnitt. Die Förderkanalwand 28 ist in dem gekrümmten Bereich mit nicht gezeigten Schlitzen versehen, durch die sich die Messer 40 erstrecken können.

Die Stellvorrichtung 30 ist in diesem Ausführungsbeispiel als ein doppeltwirkender Hydraulikzylinder ausgebildet, dessen kolbenstangenseitiges Ende an dem stromabwärts gelegenen Anschluß 42 angreift, während sie anderenends an den Aufbau 12 angeschlossen ist. Die Stellvorrichtung 30 erstreckt sich im Wesentlichen senkrecht und ist an den nur vereinfacht dargestellten Hydraulikkreis 32 angeschlossen, der unter anderem eine Feder 56 in der Form eines Gasdruckspeichers auf der Kolbenstangenseite aufweist. Diese Feder 56 wird belastet, wenn übermäßig viel Fördergut in den Förderkanal 36 eingezogen wird und die Förderkanalwand 28 von dem Förderrotor 26 wegdrückt.

Der Hydraulikkreis 32 ist herkömmlich ausgebildet und kann so manuell oder automatisch bedient werden, dass er die Förderkanalwand 28 von dem Förderrotor 26 weg oder auf diesen zu bewegt. Der Hydraulikkreis 32 ist nur der Einfachheit wegen nur in Figur 2 gezeigt, ansonsten aber bei diesem Ausführungsbeispiel stets enthalten. Grundsätzlich könnte aber auch eine mechanische oder elektrische Verstellung gewählt werden.

Die Schneidvorrichtung 34 ist ebenfalls herkömmlich ausgebildet und wird nur durch die Messer 40 dargestellt. Danach sind die Messer 40 in einem Rahmen gelagert und können sowohl bei Überlast gegen Federlast ausweichen, als auch gewollt aus dem Förderkanal 36 herausgeschwenkt oder de-installiert werden, um den Förderkanal 36 freizugeben. Die Messer 40 reichen bis ziemlich an den Förderrotor 26 heran.

Nach alledem ergibt sich folgende Funktion ausgehend von einem normalen Betriebszustand, wie er in den Figuren 1 und 2 gezeigt ist.

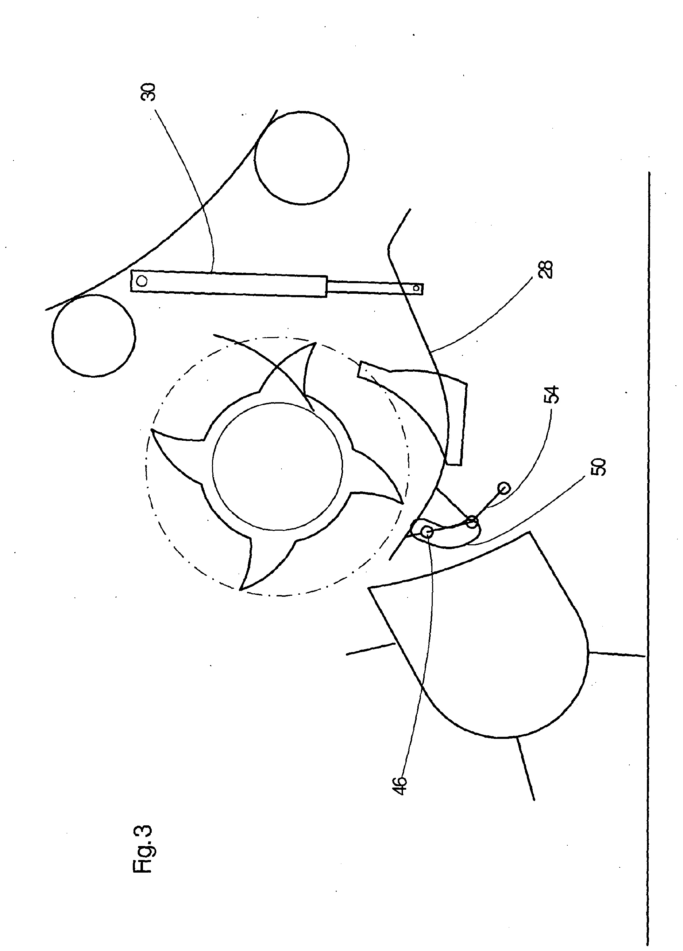

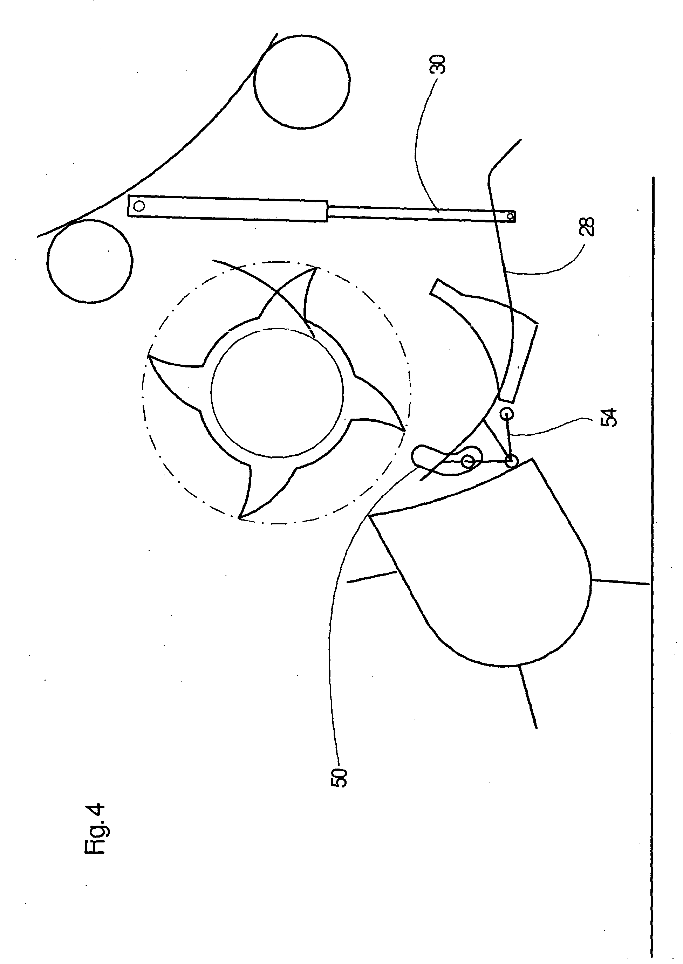

Gemäß Figur 2 befindet sich die Förderkanalwand 28 sowohl am stromaufwärts wie auch am stromabwärts gelegenen Endbereich in der dem Förderrotor 26 zugelegenen Stellung und das zweite Lager 46 liegt am oberen Ende der Führung 50 an; die Stellvorrichtung 30 ist eingefahren und die Messer 40 - soweit vorhanden oder eingebaut - reichen durch die Schlitze. In einem Fall, in dem so viel Gut in den Förderkanal 36 gelangt und von dem Förderrotor 26 gegen die Förderkanalwand 28 gepresst wird, dass die Stellvorrichtung 30 gegen die Kraft der Feder 56 bewegt wird, geschieht folgendes. Die Stellvorrichtung 30 überwindet die Kraft der Feder 56 und schwenkt die Förderkanalwand 28 von dem Förderrotor 26 weg, und zwar um einen gedachten Schwenkpunkt, der sich aus dem Zusammenwirken des ersten Lagers 44, des Lenkers 54, des maschinenseitigen Lagers 52, des zweiten Lagers 46 und der Führung 50 ergibt. Während dieser Schwenkbewegung leitet der Lenker 54 das zweite Lager 46 in der Führung 50, so dass es dort nicht fallen, sondern nur kontrolliert gleiten kann. Die Verbindung mittels des Lenkers 54 führt auch zu einer Zwangsbewegung des zweiten Lagers 46 und somit des stromaufwärts gelegenen Endes der Förderkanalwand 28 weg von dem Förderrotor 26. Diese Zwangsbewegung ergibt sich daraus, dass der Lenker 54 aus der geraden Verbindungslinie aller Lager 44, 46, 52 ausgelenkt wird und sich ein Dreieck bildet, dessen Hypothenuse sich zwischen dem zweiten Lager 46 und dem maschinenseitigen Lager 52 erstreckt und je kürzer wird, je weiter die Förderkanalwand 28 von dem Förderrotor 26 wegschwenkt. Dabei wirkt die Führung 50 auch als seitliche Anlage für das zweite Lager 46, so dass sich das Dreieck bilden muß. In Figur 3 ist eine Zwischenstufe dargestellt, während in Figur 4 das zweite Lager 46 an dem unteren Ende der Führung 50 anliegt und sich im Wesentlichen ein rechtwinkliges Dreieck gebildet hat.

## Patentansprüche

1. Landwirtschaftliche Erntemaschine, insbesondere Presse oder
Ladewagen mit einer Förderkanalwand (28), die ein stromaufwärts gelegenes Lager (44) und einen stromabwärts gelegenen Anschluß (42) für einen Endbereich einer Stellvorrichtung (30) aufweist, die andererseits maschinenseitig anbringbar ist, und mit einem Lenker (54) zwischen dem stromaufwärts gelegenen Lager (44) und einem maschinenseitigen Lager (52), **gekennzeichnet durch** ein zweites Lager (46) der Förderkanalwand (28) an deren stromaufwärts gelegenem Endbereich, das abhängig von der **durch** die Stellvorrichtung (30) erzeugten Stellung der Förderkanalwand (28) in einer maschinenseitigen Führung (50) geführt wird.

2. Landwirtschaftliche Erntemaschine nach Anspruch 1, **dadurch gekennzeichnet, dass** die Führung (50) eine Krümmung aufweist.

3. Landwirtschaftliche Erntemaschine nach Anspruch 1 oder 2, **dadurch gekennzeichnet, dass** das stromaufwärts gelegene Lager (44), das zweite Lager (46) und das maschinenseitige Lager (52) des Lenkers (54) im Wesentlichen auf einer Gerade liegen, wenn sich das zweite Lager (46) in einem Endbereich der Führung (50) befindet.

4. Landwirtschaftliche Erntemaschine nach einem oder mehreren der vorherigen Ansprüche, **dadurch gekennzeichnet, dass** das stromaufwärts gelegene Lager (44), das zweite Lager (46) und das maschinenseitige Lager (52) des Lenkers (54) die Ecken im Wesentlichen eines rechtwinkligen Dreiecks bilden, wenn sich das zweite Lager (46) in einem anderen Endbereich der Führung (50) befindet.

5. Landwirtschaftliche Erntemaschine nach einem oder mehreren der vorherigen Ansprüche, **dadurch gekennzeichnet, dass** die Stellvorrichtung (30) fremdkraftbetätigbar ist, insbesondere hydraulisch oder elektrisch.

6. Landwirtschaftliche Erntemaschine nach einem oder mehreren der vorherigen Ansprüche, **dadurch gekennzeichnet, dass** die Stellvorrichtung (30) abhängig von wenigstens einem Parameter des Fördergutstroms gesteuert wird.

7. Landwirtschaftliche Erntemaschine nach einem oder mehreren der vorherigen Ansprüche, **dadurch gekennzeichnet, dass** die Stellvorrichtung (30) von einer Feder (56) beaufschlagt wird.

## Claims

1. Agricultural harvester, in particular baler or self-loading forage box, with a conveying channel wall (28) which has an upstream bearing (44) and a downstream connection (42) for an end region of an adjusting device (30), the other side of which can be fixed on the machine, and with a link (54) between the upstream bearing (44) and a machine-side bearing (52), **characterized by** a second bearing (46) of the conveying channel wall (28) at the upstream end region thereof, said bearing being guided in a machine-side guide (50) as a function of the position of the conveying channel wall (28), which position is brought about by the adjusting device (30).

2. Agricultural harvester according to Claim 1,
**characterized in that** the guide (50) has a curvature.

3. Agricultural harvester according to claim 1 or 2, **characterized in that** the upstream bearing (44), the second bearing (46) and the machine-side bearing (52) of the link (54) lie substantially on a straight line when the second bearing (46) is located in an end region of the guide (50).

4. Agricultural harvester according to one or more of the preceding claims, **characterized in that** the upstream bearing (44), the second bearing (46) and the machine-side bearing (52) of the link (54) form the corners essentially of a right-angled triangle when the second bearing (46) is located in another end region of the guide (50).

5. Agricultural harvester according to one or more of the preceding claims, **characterized in that** the adjusting device (30) can be actuated by external force, in particular hydraulically or electrically.

6. Agricultural harvester according to one or more of the preceding claims, **characterized in that** the adjusting device (30) is controlled as a function of at least one parameter of the stream of material being conveyed.

7. Agricultural harvester according to one or more of the preceding claims, **characterized in that** the adjusting device (30) is acted upon by a spring (56).

## Revendications

1. Moissonneuse agricole, en particulier presse ou remorque chargeuse, comprenant une paroi de canal de transport (28), qui présente un support (44) placé en amont et un raccord (42) placé en aval pour une région d'extrémité d'un dispositif de commande (30), qui peut être monté de l'autre côté du côté de la machine, et comprenant un bras oscillant (54) entre le support (44) placé en amont et un support (52) du côté de la machine, **caractérisée par** un deuxième support (46) de la paroi de canal de transport (28) sur sa région d'extrémité placée en amont, qui est guidé en fonction de la position de la paroi de canal de transport (28) établie par le dispositif de commande (30), dans un guide (50) du côté de la machine.

2. Moissonneuse agricole selon la revendication 1, **caractérisée en ce que** le guide (50) présente une courbure.

3. Moissonneuse agricole selon la revendication 1 ou 2, **caractérisée en ce que** le support (44) placé en amont, le deuxième support (46) et le support (52) du bras oscillant (54), du côté de la machine, se situent essentiellement sur une droite, lorsque le deuxième support (46) se trouve dans une région d'extrémité du guide (50).

4. Moissonneuse agricole selon l'une quelconque ou plusieurs des revendications précédentes, **caractérisée en ce que** le support placé en amont (44), le deuxième support (46) et le support (52) du bras oscillant (54), du côté de la machine, forment les coins d'un triangle essentiellement rectangle, lorsque le deuxième support (46) se trouve dans une autre région d'extrémité du guide (50).

5. Moissonneuse agricole selon l'une quelconque ou plusieurs des revendications précédentes, **caractérisée en ce que** le dispositif de commande (30) peut être actionné par une force extérieure, notamment par voie hydraulique ou électrique.

6. Moissonneuse agricole selon l'une quelconque ou plusieurs des revendications précédentes, **caractérisée en ce que** le dispositif de commande (30) est commandé en fonction d'au moins un paramètre du flux de produit transporté.

7. Moissonneuse agricole selon l'une quelconque ou plusieurs des revendications précédentes, **caractérisée en ce que** le dispositif de commande (30) est sollicité par un ressort (56).
